**Europäisches Patentamt**

**European Patent Office**

**Office européen des brevets**

(19)

(11) Publication number: **0 012 593**
A1

(12) # EUROPEAN PATENT APPLICATION

(21) Application number: 79302848.1

(22) Date of filing: 11.12.79

(51) Int. Cl.³: **C 08 J 9/00**, C 08 J 9/14, C 08 L 61/14

(30) Priority: 12.12.78 GB 4804778

(43) Date of publication of application: 25.06.80 Bulletin 80/13

(84) Designated Contracting States: AT BE CH DE FR GB IT LU NL SE

(71) Applicant: **DESAI POLYMER DEVELOPMENTS LIMITED, Claremont House Claremont Bank, Shrewsbury, Salop (GB)**

(72) Inventor: **Oswitch, Stanley, Flat 4 Betton Strange Hall, Betton Strange Shrewsbury, Salop (GB)**

(74) Representative: **Huntingford, David Ian et al, W.P. THOMPSON & CO. Coopers Building Church Street, Liverpool L1 3AB (GB)**

(54) Expanded phenolic materials.

(57) Foamed phenolic material having satisfactory mechanical and thermal insulation properties comprise the reaction product of a mixture comprising a phenolic resin and an epoxy resin, the reaction being effected in the presence of a foaming or blowing agent, a catalyst, a reinforcing material, at least one filler material and, optionally, a surfactant.

EP 0 012 593 A1

## DESCRIPTION

<u>"EXPANDED PHENOLIC MATERIALS"</u>

The present invention relates to improved expanded phenolic materials.

Foamed or expanded thermosetting phenolic resins, when fully cured, are thermal insulators which exhibit low flammability and generate minimal smoke on forced combustion. For this reason they have been used as interlayers in various types of sandwich structures, i.e. double-skinned composites with the expanded phenolic material as an interlayer, used in the building and allied industries.

Expanded phenolic materials in current use, however, generally suffer from one or more of the following disadvantages:

(i) poor mechanical and load bearing properties,

(ii) extreme friability of surface structure,

(iii) poor abrasion resistance,

(iv) less than optimum thermal insulative properties when compared to polyurethanes,

(v) a tendency to some surface spread of flame, and

(vi) a type of auto-ignition characteristic termed "punking".

A further disadvantage of expanded phenolic materials in current use is that the "Limiting Oxygen Index" (LOI) is often in the region of 35 to 45% oxygen. The Limiting Oxygen Index is the concentration of oxygen necessary in an atmosphere to allow a sample of the expanded phenolic material, situated in that atmosphere, to be ignited. The relatively low Limiting Oxygen Index values often encountered with currently available expanded phenolic materials limit their range of application in that they are not suitable for use in potentially high fire-risk situations.

By practice of the present invention there may be provided an expanded or foamed phenolic material having considerably improved mechanical properties, enhanced fire resistance, a significant increase in the Limiting Oxygen Index value, and which is not subject to "punking" or surface friability.

According to the present invention there is provided an expanded or foamed phenolic material formed by reacting a mixture comprising a phenolic resin and an epoxy resin in the presence of a foaming or blowing agent, a catalyst, a reinforcing material and at least one filler material.

The phenolic resin used in producing the expanded phenolic material of the present invention can, for example, be a liquid phenolic resin or a solution of a phenolic resin, e.g., a solid phenolic resin, in a suitable solvent.

The phenolic resin used may, for example, be in the "B" stage and curable to form a fully crosslinked, insoluble "C" stage material.

An example of a suitable phenolic resin for use in preparing the expanded phenolic material of the present invention is a phenolic resin of the resol type. Preferably, the resol type resin is prepared by condensing a phenol, e.g., phenol, with formaldehyde, paraformaldehyde or like material. For example, 1 mole of the phenol may be condensed with 1 to 3 moles of formaldehyde, paraformaldehyde or like material.

The phenolic resin used in forming the expanded phenolic material of the present invention may have a viscosity of, for example, approximately 20 poises at ambient temperature. The phenolic resin may, for example, also have a solids content of approximately 76% and/or a specific gravity of approximately 1.3 and/or a hot plate cure time of approximately 65 seconds.

Suitable phenolic resins for use in the present invention include SMD 3083 (a product of Schenectady-Midland Limited), Lankro BK2 (a product of Lankro Limited), and mixtures thereof, for example, a 50:50 mixture.

The epoxy resin used in forming the expanded phenolic material of the present invention should preferably be a liquid epoxy resin, for example, a liquid bifunctional epoxy resin.

The epoxy resin may, for example, be obtained by condensing epichlorohydrin with polyhydroxy compounds such as Bisphenol A. For example, the epoxy resin may be obtained by reacting 1 mole of Bisphenol A with 2 moles of epichlorohydrin. Suitable epoxy resins include CY 219 (a product of Ciba-Geigy Limited) and Epikote 828 (a product of Shell Chemicals).

Preferably, the epoxy resin is used in an amount of from 3 to 20 parts by weight per 100 parts by weight of the phenolic resin.

The epoxy resin is a thermosetting resin which copolymerises with the phenolic resin to yield a copolymer exhibiting enhanced toughness and resistance to friability over the normal expanded phenolic resin. Also, the phenolic resin/epoxy resin copolymer appears to bond to metal and other substrates better than the phenolic resin alone.

The epoxy resin does not contribute to the extremely low flammability properties of the fully cured copolymer in any negative way. However, it may lead to a very small increase in smoke generation upon forced combustion.

The foaming or blowing agent used in forming the expanded phenolic material of the present invention may, for example, be a low-boiling point organic liquid, e.g., of the type used as refrigerants. Suitable foaming or blowing agents include hydrocarbons or halohydrocarbons such as "Freon" (a trade name of I.C.I. Limited), preferably Freon 11.

Preferably, the foaming or blowing agent is used in an amount of from 5 to 20 parts by weight per 100 parts by weight of the phenolic resin.

The catalyst used in producing the expanded phenolic material of the present invention may, for example, be

- 4 - 0012593

an organic or inorganic acid catalyst. Suitable organic acids include para toluene sulphonic acid, which may be obtained from Lankro Limited under the name "Phencat 38", and para cresol sulphonic acid. Suitable inorganic acids include phosphoric acid and mineral acids such as sulphuric acid and hydrochloric acid. Adducts or derivatives of the inorganic or organic acids may alternatively be used so long as they have the required pH lowering effect.

If mineral acids are utilized as the catalyst, then they should preferably be sufficiently diluted in order that the safety and corrosion problems associated with the use of concentrated mineral acids are avoided or substantially reduced. Because of the potential safety and corrosion problems associated with the use of mineral acids, the organic or weak inorganic acids are preferred for use as the catalyst.

The catalyst is preferably utilized in an amount of from 5 to 35 parts by weight per 100 parts by weight of the phenolic resin.

Suitable materials for use as the reinforcing material include fibrous materials, such as glass fibre and carbon fibre. Glass fibres are preferably used in the form of chopped glass fibres, e.g., of approximately 6 mm and/or approximately 12mm length.

Thermally conductive materials, e.g, metallic materials, and/or combustible materials are undesirable for use as the reinforcing material since their presence in the expanded phenolic material would adversely affect its thermal insulation property and/or low flammability, respectively.

Preferably, the reinforcing material is present, in the expanded phenolic material of the present invention, in an amount of from 3 to 20 parts by weight per 100 parts by weight of the phenolic resin.

Suitable filler materials for use in the present invention include water scavengers and non-combustible hollow microspheres, for example, hollow ceramic microspheres.

The term "water scavenger", as used herein, refers to a material that will absorb water but will remain in a relatively dry condition, for example, Plaster of Paris ($2CaSO_4 \cdot H_2O$) or silica gel.

Deliquescent materials, such as calcium chloride, are not intended to be included within the scope of the term "water scavenger" since they absorb so much water that they eventually dissolve in it and are, therefore, unsatisfactory for use in the expanded phenolic materials of the present invention.

The water scavenger, if present, serves to remove water produced during the curing of the phenolic and epoxy resins and then, in its more highly hydrated form, acts as a filler. For example, Plaster of Paris ($2CaSO_4 \cdot H_2O$) is converted to gypsum ($CaSO_4 \cdot 2H_2O$) on absorbing water. The removal of free water is considered to be advantageous for the in-situ foaming of the phenolic resin/epoxy resin copolymer in that it also contributes to improved bonding to substrates.

The water scavenger, when present is preferably used in an amount of from 20 to 80 parts by weight per 100 parts by weight of the phenolic resin.

The non-combustible microspheres, when incorporated into the expanded phenolic material of the present invention, yield a syntactic foam within the chemically expanded cellular structure. Thus, there will be two modes of producing a foam within the same copolymer. The net result of such a syntactic/expanded foam structure is the enhancement of the thermal insulation characteristics of the fully-cured system and an appreciable lowering of overall weight.

Preferably, the non-combustible, hollow microspheres are in the form of hollow ceramic microspheres which are very resistant to fire due to their ceramic nature.

The non-combustible, hollow microspheres, when present, are preferably used in an amount of from 5 to 100 parts by weight per 100 parts by weight of the phenolic resin.

In addition to reacting the mixture comprising the phenolic resin and the epoxy resin in the presence of the foaming or blowing agent, catalyst, reinforcing material and at least one filler, a surfactant, for example "Tween 80" (a product of Atlas Chemicals Limited) may also be present.

When present, the surfactant is preferably used in an amount of up to 5 parts by weight per 100 parts by weight of the phenolic resin.

The surfactant can be used to control the size and regularity of the cells forming the expanded phenolic material of the present invention.

The expanded phenolic materials of the present invention are produced by reacting the mixture comprising the phenolic resin and the epoxy resin in the presence of the catalyst, foaming or blowing agent, the reinforcing material, the at least one filler and, optionally, the surfactant.

The expanded phenolic materials of the present invention are preferably produced by mixing together the phenolic resin, the epoxy resin and, if present, the surfactant. Any suitable stirrer system may be utilised to effect this mixing, such as a Hobart mixer.

The mixture obtained is then compounded with the foaming or blowing agent. The Filler material, for example a mixture of Plaster of Paris and hollow ceramic microspheres, is subsequently admixed with the resin mixture and the catalyst added. At this stage, a period

0012593

of 3 to 4 minutes is normally available before the chemical reaction commences. The glass fibre is added as a final step and the whole stirred until homogeneous.

Just prior to the commencement of the chemical curing reaction, and the foaming or blowing agent-induced expansion, the fully mixed formulation is placed, e.g., pumped or poured, into the final containment vessel or hollow space. Generally within 10 to 30 minutes the system fully expands, for example from 0.5 to 3.0 expansion ratios, and cures and hardens. The reaction is preferably allowed to take place at ambient temperature.

The present invention will now be further described by way of the following Examples:-

Example 1

This Example illustrates a preferred formulation for producing an expanded phenolic material in accordance with the present invention. The formulation is as follows:-

| Component | Parts by weight |
|---|---|
| Liquid phenolic resin (e.g., Schenectady-Midland Limited, SMD 3083) | 100 |
| Catalyst (e.g, "Phencat 38") | 5 to 35 |
| Epoxy resin (e.g., Ciba-Geigy, CY 219) | 3 to 20 |
| Plaster of Paris | 20 to 80 |
| Hollow Ceramic microspheres (H.C.M.) | 5 to 100 |
| Freon 11 | 5 to 20 |
| Tween 80 | 0 to 5 |
| Glass fibre (Chopped, approximately 6 mm and/or approximately 12 mm length) | 3 to 20 |

Example 2

This example illustrates a formulation for producing an expanded phenolic material in accordance with the present invention and which, upon cure, has a specific gravity of approximately 0.45. The formulation is as follows:-

| Component | Parts by weight |
|---|---|
| Phenolic resin (a 50:50 mix of SMD 3083 and Lankro BK2) | 100 |
| Phencat 38 Catalyst | 17 |
| Epoxy resin (CY 219) | 5 |
| Freon 11 | 12 |
| Tween 80 | 2 |
| H.C.M. | 50 |
| Plaster of Paris | 100 |
| Glass fibre (approximately 6 mm length) | 5 |
| Glass fibre (approximately 12 mm length) | 5 |

The expanded phenolic material according to the present invention is a stable, hard and rigid material which is generally non-friable or substantially non-friable and which may, for example, have a specific gravity of from 0.15 to 1.0.

A series of tests were carried out on samples of expanded phenolic materials of the present invention and yielded the following results:-

Ignitability (B.S. 476, Part 5):

No ignition was observed with the test flame applied.

Fire Propagation (B.S. 476, Part 6):

The samples were found to have a very high resistance to fire propagation with indices of 3.64 and 9.7 for "i" and total index I, respectively. This means that after 3 minutes, the index of performance was 3.64 and a total fire propagation index of 9.7, which indicates very considerable resistance to fire propagation.

Surface spread of flame (B.S. 476, Part 7):

The material had a class I rating, which is the highest classification.

Smoke Generation (B.S. 5111):

A maximum of 10% obscuration was produced after 195 seconds, which is a very low value. The smoke was observed to be light in colour.

Limiting Oxygen Index (L.O.I.):

The Limiting Oxygen Index was 66.5%, which is a very good result.

In addition to the above tests, the samples were found to exhibit no tendency to "punk" or self-ignite.

It will, of course, be clear to one skilled in the art that minor amounts of materials, other than the phenolic resin, epoxy resin, catalyst, foaming or blowing agent, reinforcing material, filler(s) and optional surfactant, may be incorporated in the expanded phenolic material of the present invention.

- 1 -

## CLAIMS

1. An expanded or foamed phenolic material, characterized in that it comprises the reaction product of a mixture comprising a phenolic resin and an epoxy resin, the reaction being effected in the presence of a foaming or blowing agent, a catalyst, a reinforcing material and at least one filler material.

2. An expanded or foamed phenolic material as claimed in claim 1, characterized in that the phenolic resin is a resol type phenolic resin.

3. An expanded or foamed phenolic material as claimed in claim 1 or claim 2, characterized in that the epoxy resin is a liquid epoxy resin.

4. An expanded or foamed phenolic material as claimed in any of claims 1 to 3, characterized in that the epoxy resin is used in an amount of from 3 to 20 parts by weight per 100 parts by weight of the phenolic resin.

5. An expanded or foamed phenolic material as claimed in any of claims 1 to 4, characterized in that the foaming or blowing agent is a hydrocarbon or halohydrocarbon.

6. An expanded or foamed phenolic material as claimed in any of claims 1 to 5, characterized in that the foaming or blowing agent is used in an amount of from 5 to 20 parts by weight per 100 parts by weight of the phenolic resin.

7. An expanded or foamed phenolic material as claimed in any of claims 1 to 6, characterized in that the catalyst is an inorganic or organic acid catalyst.

8. An expanded or foamed phenolic material as claimed in any of claims 1 to 7, characterized in that the catalyst is used in an amount of from 5 to 35 parts by weight per 100 parts by weight of the phenolic resin.

9. An expanded or foamed phenolic material as claimed in any of claims 1 to 8, characterized in that the reinforcing material is selected from glass fibres and carbon fibres.

10. An expanded or foamed phenolic material as claimed in any of claims 1 to 9, characterized in that the reinforcing material is used in an amount of from 3 to 20 parts by weight per 100 parts by weight of the phenolic resin.

11. An expanded or foamed phenolic material as claimed in any of claims 1 to 10, characterized in that the at least one filler material is selected from water scavengers (as hereinbefore defined) and non-combustible, hollow microspheres.

12. An expanded or foamed phenolic material as claimed in claimed 11, characterized in that the at least one filler material comprises a water scavenger which is Plaster of Paris or silica gel.

13. An expanded or foamed phenolic material as claimed in claim 11 or claim 12, characterized in that the at least one filler material comprises non-combustible, hollow microspheres which are hollow ceramic microspheres.

14. An expanded or foamed phenolic material as claimed in claim 11 or claim 12, characterized in that the water scavenger is present in an amount of from 20 to 80 parts by weight per 100 parts by weight of the phenolic resin.

15. An expanded or foamed phenolic material as claimed in claim 11 or claim 13, characterized in that the non-combustible, hollow microspheres are used in an amount of from 5 to 100 parts by weight per 100 parts by weight of the phenolic resin.

16. An expanded or foamed phenolic material as claimed in any of claims 1 to 15, characterized in that the reaction is also effected in the presence of a surfactant.

17. An expanded or foamed phenolic material as claimed in claim 16, characterized in that the surfactant is used in an amount of up to 5 parts by weight per 100 parts by weight of the phenolic resin.

European Patent Office

**EUROPEAN SEARCH REPORT**

0012593

Application number

EP 79 30 2848

| Category | Citation of document with indication, where appropriate, of relevant passages | Relevant to claim |
|---|---|---|
| **DOCUMENTS CONSIDERED TO BE RELEVANT** | | |
| X | <u>GB - A - 1 087 056</u> (UNION CARBIDE)<br>* Claims 1,3-13,16-18,21,22,24-26; page 1, lines 11-17; page 3, lines 45-48; page 3, line 63 - page 4, line 33; page 9, lines 17-23; page 9, line 37 - page 10, line 74; example 5 *<br><br>-- | 1-8,11,<br>12,16,<br>17 |
| | <u>GB - A - 1 524 266</u> (RHONE-POULENC)<br>(13-09-1978)<br>* Claims; page 1, lines 60-90; page 2, lines 19-40; page 2, lines 79-82 *<br><br>-- | 1,2,9,<br>11,12 |
| | <u>US - A - 3 842 020</u> (W.L. GARRETT)<br>* Claims 1,3,6-11; column 3, line 15 - column 4, line 28; example 22 *<br><br>-- | 1,2,7-<br>11,13,<br>16,17 |
| A | <u>GB - A - 1 247 669</u> (COURTAULDS)<br>* Claims 1,7 *<br><br>---- | 1,9 |

**CLASSIFICATION OF THE APPLICATION (Int. Cl.**

C 08 J   9/00
          9/14
C 08 L 61/14

**TECHNICAL FIELDS SEARCHED (Int.Cl.**

C 08 J   9/14
          9/00
          9/32
C 08 L 61/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family.
' corresponding document

The present search report has been drawn up for all claims

| Place of search | Date of completion of the search | Examiner |
|---|---|---|
| The Hague | 19-03-1980 | HALLEMEESCH |

EPO Form 1503.1   06.78